# FASCICULE DE BREVET EUROPEEN

(11) **EP 2 007 106 B1**
(45) Date de publication et mention de la délivrance du brevet: **02.08.2017**
(21) Numéro de dépôt: 08003543.9
(22) Date de dépôt: 27.02.2008
(51) Int. Cl.: H04L 29/08, H04L 9/32, H04W 12/04, H04L 9/08, H04L 9/30, H04L 29/06, H04W 12/06, H04W 12/02

(54) **Procédé de chargement sécurise de données d' accès à un service dans un chipset NFC**
Verfahren zum gesicherten Laden von Zugangsdaten zu einem Dienst in einem NFC-Chipsatz
Secure method of loading data to access a service in an NFC chipset

(30) Priorité: 07.03.2007 FR 0701670; 26.10.2007 FR 0707528
(43) Date de publication de la demande: 24.12.2008
(73) Titulaire: Inside Secure, 13590 Meyreuil (FR)
(72) Inventeur: Benteo, Bruno, 31400 Toulouse (FR); Charrat, Bruno, 13090 Aix en Provence (FR); Martineau, Philippe, 13710 Fuveau (FR)
(74) Mandataire: Marchand, André

(56) Documents cités:
- WO-A-2006/122433
- US-B1- 6 490 680
- US-B1- 7 142 676
- MENEZES A ET AL: "Handbook of Applied Cryptography" HANDBOOK OF APPLIED CRYPTOGRAPHY; [CRC PRESS SERIES ON DISCRETE MATHEMATICES AND ITS APPLICATIONS], CRC PRESS LLC, USA, 1 janvier 1997 (1997-01-01), pages 546-550, XP002203748 ISBN: 978-0-8493-8523-0

## Description

La présente invention concerne un procédé de chargement de données et/ou d'une application sécurisée dans un système ou chipset NFC (Near Field Communication) comprenant un circuit d'interface NFC.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants NFC présentant plusieurs modes de fonctionnement, à savoir un mode "lecteur" (Reader Mode), un mode "émulation de carte", et un mode "device " (appelé également mode "device-to-device" soit "dispositif à dispositif"). Dans le mode "lecteur", le composant NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le composant NFC fonctionne de façon passive à la manière d'un transpondeur pour dialoguer avec un autre lecteur et être vu par l'autre lecteur comme une puce RFID. Le composant n'émet pas de champ magnétique, reçoit des données en démodulant un champ magnétique émis par l'autre lecteur et émet des données par modulation de l'impédance de son circuit d'antenne (modulation de charge). Dans le mode "device", le composant doit s'apparier avec un autre composant NFC se trouvant dans le même mode de fonctionnement, et chaque composant NFC se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un composant NFC peut mettre en oeuvre plusieurs protocoles de communication sans contact et est par exemple capable d'échanger des données suivant le protocole ISO 14443-A, le protocole ISO 14443-B, le protocole ISO 15693, etc. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC est donc un dispositif multimode et multiprotocole. La demanderesse commercialise par exemple un composant NFC sous la désignation "MicroRead".

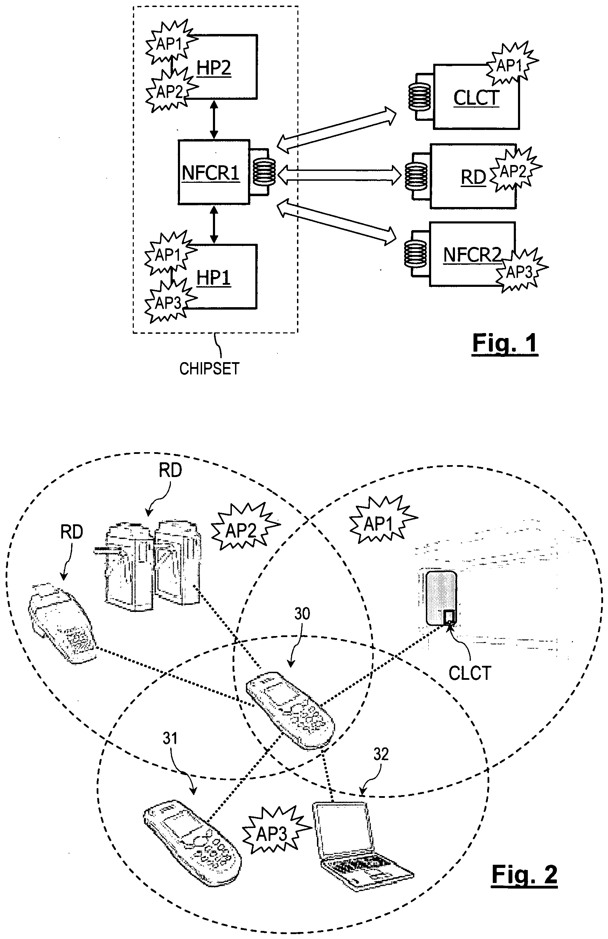

En raison de ses capacités de communication étendues, un composant NFC est destiné à être intégré dans des dispositifs portatifs tels des téléphones portables ou des PDA (Assistant Numérique Personnel). On est donc amené à réaliser un chipset NFC du type représenté en figure 1, c'est à dire un ensemble de puces comprenant un composant NFC (référencé "NFCR1") et au moins un premier processeur hôte HP1. On entend par "processeur hôte" tout circuit intégré comprenant un microprocesseur ou un microcontrôleur et qui est connecté à un port du composant NFC. Dans de nombreuses applications, le chipset NFC comprend également un second processeur hôte HP2, et parfois un troisième HP3.

Le premier processeur hôte HP1 est le processeur principal du dispositif dans lequel le composant NFC est embarqué, tandis que le second processeur hôte HP2 est un circuit sécurisé. Le processeur hôte HP1 est généralement un processeur non sécurisé, par exemple le circuit de bande de base d'un téléphone mobile ("baseband" ou circuit de radiotéléphonie). Le processeur hôte HP2 est par exemple une carte SIM (c'est-à-dire le microcontrôleur présent dans une carte SIM). D'autres processeurs hôtes peuvent être prévus notamment pour des applications de fourniture de services autres que des services de communication, comme des services bancaires permettant d'utiliser le chipset NFC comme moyen de paiement.

Les ressources du composant NFC sont donc mises à la disposition des processeurs HP1, HP2 pour leur permettre de gérer des applications sans contact. De telles applications sont illustrées sur la figure 2 qui représente un téléphone mobile 30 équipé du chipset NFC de la figure 1. On distingue :
1) des applications de type AP1 : le composant NFC du téléphone mobile 30 est en mode lecteur pour lire ou écrire un circuit intégré sans contact CLCT. Le téléphone mobile est dans ce cas utilisé comme un lecteur RFID. Ce type d'application peut être gratuit et consister par exemple dans la lecture de données publicitaires insérées dans un affichage publicitaire d'une aubette. L'application peut aussi être payante et consister par exemple dans la lecture d'informations réservées à des abonnés. Le programme de l'application AP1 est de préférence détenu et exécuté par le processeur HP1 si le service est gratuit ou sera de préférence détenu et exécuté par le processeur HP2 s'il est payant car il nécessite une identification de l'abonné. Ainsi, comme illustré en figure 1, une application AP1 peut être prise en charge par le processeur HP1 ou le processeur HP2.
2) des applications de type AP2 : le composant NFC du téléphone 30 est en mode émulation de carte pour être lu par des lecteurs RD conventionnels dans des applications de paiement ou de contrôle d'accès payant (machine de paiement, entrée de métro, etc.). Le téléphone mobile 30 est alors utilisé comme une carte à puce. Le programme de l'application AP2 est de préférence détenu et exécuté par le processeur sécurisé HP2, comme représenté en figure 1, car l'accès au service nécessite une identification de l'abonné.
3) des applications de type AP3 : le composant NFC du téléphone 30 est en mode "device" et dialogue avec un autre dispositif, par exemple un lecteur embarqué dans un autre téléphone mobile 31 ou dans un ordinateur 32. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

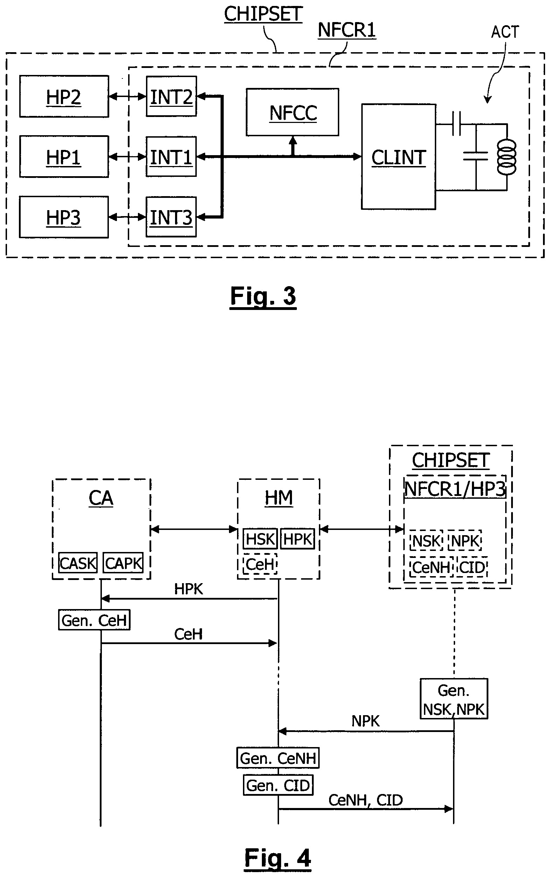

La figure 3 représente schématiquement l'architecture d'un composant NFC. Le composant comprend un circuit d'interface CLINT pour l'émission/réception de données sans contact, équipé d'un circuit d'antenne ACT, des interfaces de communication filaires INT1, INT2, INT3 reliées au circuit d'interface CLINT, et un contrôleur NFCC. L'interface INT1 est connectée au processeur hôte HP1, l'interface INT2 connectée au processeur hôte HP2, et l'interface INT3 est connectée au processeur hôte HP3. L'ensemble de ces composants forme un chipset NFC.

Dans les applications de type AP2, il est toutefois nécessaire de pouvoir identifier le chipset et/ou son propriétaire avec un niveau de sécurité élevé. Or l'un des processeurs hôtes (par exemple HP2), c'est-à-dire la carte SIM du téléphone mobile, permet d'identifier avec un haut niveau de sécurité l'utilisateur auprès de l'opérateur de téléphonie mobile. A cet effet, la carte SIM est fournie et personnalisée par l'opérateur. Il est donc peu envisageable d'introduire dans la carte SIM d'autres données ou applications permettant la mise en oeuvre de services fournis par d'autres entités, telles que des organismes bancaires ou des fournisseurs de services par exemple de transport. Il apparaît donc nécessaire de prévoir un autre processeur hôte sécurisé dans le chipset. La prévision d'une seconde carte amovible de type carte SIM personnalisée par le fournisseur de services, présente des inconvénients en termes d'encombrement et de consommation électrique. En outre, si l'utilisateur souhaite accéder à d'autres services que ceux proposés par le fournisseur de services ayant fourni la carte SIM, il est difficilement envisageable d'utiliser la même carte SIM car l'application nécessaire à la mise en oeuvre du service sera difficile à certifier. L'utilisateur devra donc obtenir une autre carte et changer la carte insérée dans le chipset à chaque fois qu'il souhaite accéder à d'autres services. La prévision d'un processeur hôte sécurisé non amovible dans un chipset NFC soulève également des difficultés quant à la procédure de personnalisation du processeur hôte nécessaire à l'établissement de communications sécurisées entre le processeur hôte et l'extérieur du chipset, soit par l'intermédiaire d'un réseau de télécommunication mobile, soit par l'intermédiaire de la liaison sans contact offerte par le composant NFC.

Il est donc souhaitable de permettre à un chipset d'accéder à des services fournis par des entités distinctes avec un niveau de sécurité équivalent à celui offert par une carte SIM.

Ainsi, dans un mode de réalisation, il est prévu un procédé de chargement sécurisé de données dans un processeur hôte sécurisé d'un système de type Near Field Communication NFC.

Selon un mode de réalisation, le procédé comprend des étapes consistant à : générer une donnée secrète, déterminer un système NFC destinataire de la donnée secrète à partir d'un identifiant de l'utilisateur, le système NFC comportant un circuit d'interface NFC d'émission et de réception de données, transmettre la donnée secrète à un premier processeur hôte du système NFC destinataire, par l'intermédiaire d'une première liaison sécurisée établie en fonction de l'identifiant de l'utilisateur ou par l'intermédiaire de l'utilisateur, chiffrer des données à charger dans le premier processeur hôte en utilisant une clé publique du premier processeur hôte, et transmettre les données chiffrées au premier processeur hôte par l'intermédiaire d'une seconde liaison indépendante de la première, établie en fonction de l'identifiant de l'utilisateur ou par l'intermédiaire de l'utilisateur, et déchiffrer par le premier processeur hôte les données chiffrées, à l'aide d'une clé privée correspondant à la clé publique du premier processeur hôte, l'une ou l'autre des étapes de transmission et de déchiffrement des données chiffrées n'étant pas effectuée si la donnée secrète reçue par le premier processeur hôte ne correspond pas à la donnée secrète générée.

Selon un mode de réalisation, le procédé comprend des étapes de chiffrement des données à charger dans le processeur hôte à l'aide de la donnée secrète, avant d'être transmises au processeur hôte, et de déchiffrement des données chiffrées, à l'aide de la donnée secrète par le processeur hôte.

Selon un mode de réalisation, le procédé comprend des étapes préalables d'authentification du système NFC et d'un opérateur générant la donnée secrète.

Selon un mode de réalisation, l'authentification du système NFC et de l'opérateur est effectuée par un fournisseur de service fournissant les données à charger dans le processeur hôte, en vérifiant des certificats auprès d'une autorité de confiance.

Selon un mode de réalisation, la donnée secrète (PIN) est transmise au système NFC destinataire par l'utilisateur du système NFC, qui reçoit la donnée secrète et l'introduit dans le système NFC.

Selon un mode de réalisation, la donnée secrète est transmise sous forme signée par un opérateur ayant généré la donnée secrète, et la signature étant vérifiée par un fournisseur de service fournissant les données à charger dans le premier processeur hôte.

Selon un mode de réalisation, les données à charger sont transmises sous forme chiffrée au système NFC par l'intermédiaire d'un réseau de téléphonie mobile, et par l'intermédiaire d'un circuit de base de téléphone mobile.

Selon un mode de réalisation, les données à charger sont transmises sous forme chiffrée au système NFC par l'intermédiaire d'une carte à circuit intégré à lecture sans contact communiquant avec le circuit d'interface NFC.

Selon un mode de réalisation, la première liaison est réalisée par l'intermédiaire d'un second processeur hôte sécurisé du système NFC.

Selon un mode de réalisation, l'établissement de la première liaison de communication sécurisée est réalisé entre le premier processeur hôte et un opérateur ayant généré la donnée secrète et comprend des étapes de : authentification du système NFC par une autorité de confiance, génération d'une clé de session, chiffrement de la clé de session à l'aide d'une clé publique du premier processeur hôte, transmission de la clé de session chiffrée au premier processeur hôte, et déchiffrement de la clé de session par le premier processeur hôte à l'aide d'une clé privée correspondant à la clé publique du premier processeur hôte, la clé de session étant ensuite utilisée pour chiffrer des données transmises entre le premier processeur hôte et l'opérateur.

Selon un mode de réalisation, la clé de session est générée par un second processeur hôte sécurisé du système NFC.

Selon un mode de réalisation, le procédé comprend des étapes initiales de réception par le premier processeur hôte d'un certificat d'authenticité, une liaison de communication étant établie avec un opérateur après vérification du certificat d'authenticité et uniquement si le certificat est valide.

Selon un mode de réalisation, le procédé comprend des étapes d'échange de données secrètes entre un contrôleur connecté au circuit d'interface NFC, le premier processeur hôte et un troisième processeur hôte non sécurisé du système NFC, une liaison de communication entre le contrôleur, et les premier et troisième processeurs hôtes étant établie qu'après une vérification des données secrètes et uniquement si la vérification ne révèle pas d'erreur.

Selon un mode de réalisation, le procédé comprend des étapes initiales de transmission au premier processeur hôte d'un identifiant unique associé à un certificat d'authenticité, qui sont mémorisés par le premier processeur hôte.

Selon un mode de réalisation, le procédé comprend des étapes de vérification que la donnée secrète reçue par le processeur hôte correspond à la donnée secrète générée, la transmission des données chiffrées n'étant pas effectuée si la vérification révèle une erreur.

Selon un autre mode de réalisation, il est prévu un système de fourniture d'un service comprenant une entité (EI, OP) fournissant un service et plusieurs systèmes de type Near Field Communication NFC comportant chacun un premier processeur hôte sécurisé connecté à un circuit d'interface NFC assurant l'émission et la réception de données, pour accéder au service.

Selon un mode de réalisation, l'entité est configurée pour générer une donnée secrète, déterminer un système NFC destinataire de la donnée secrète à partir d'un identifiant de l'utilisateur, et chiffrer des données à charger dans le premier processeur hôte en utilisant une clé publique du premier processeur hôte, le système de fourniture de service est configuré pour transmettre la donnée secrète au premier processeur hôte du système NFC destinataire, par l'intermédiaire d'une première liaison établie en fonction de l'identifiant de l'utilisateur ou par l'intermédiaire de l'utilisateur, et transmettre les données chiffrées au premier processeur hôte par l'intermédiaire d'une seconde liaison indépendante de la première, établie en fonction de l'identifiant de l'utilisateur ou par l'intermédiaire de l'utilisateur, et le premier processeur hôte est configuré pour, déchiffrer les données reçues à l'aide d'une clé privée correspondant à la clé publique du premier processeur hôte, la transmission des données chiffrées au premier processeur hôte, ou le déchiffrement des données chiffrées n'étant pas effectué si la donnée secrète reçue par le premier processeur hôte ne correspond pas à la donnée secrète générée.

Selon un mode de réalisation, le processeur hôte est configuré pour déchiffrer les données reçues à l'aide de la donnée secrète.

Selon un mode de réalisation, le système NFC destinataire comprend un circuit de base de téléphone mobile configuré pour recevoir sous forme chiffrée les données à charger et les transmettre au premier processeur hôte.

Selon un mode de réalisation, l'interface NFC est configurée pour recevoir les données à charger sous forme chiffrée, transmises par une carte à circuit intégré à lecture sans contact, et les transmettre au processeur hôte.

Selon un mode de réalisation, le système NFC destinataire comprend un second processeur hôte sécurisé susceptible d'être connecté de manière sécurisée à l'opérateur, et configuré pour générer une clé de session, chiffrer la clé de session à l'aide d'une clé publique du premier processeur hôte, et transmettre la clé de session chiffrée au premier processeur hôte, le premier processeur hôte étant configuré pour déchiffrer la clé de session à l'aide d'une clé privée correspondant à la clé publique du premier processeur hôte, la clé de session étant ensuite utilisée pour chiffrer des données transmises entre le premier et le second processeur hôte.

Selon un mode de réalisation, le système NFC destinataire comprend un contrôleur connecté au circuit d'interface NFC, et dans lequel le premier processeur hôte, le contrôleur et un troisième processeur hôte non sécurisé, sont configurés pour échanger des données secrètes, une liaison de communication entre le contrôleur, le premier et le troisième processeur hôte étant établie qu'après une vérification des données secrètes et uniquement si la vérification ne révèle pas d'erreur.

Selon un mode de réalisation, le processeur hôte est configuré pour recevoir et mémoriser durant une phase de personnalisation un identifiant unique du système NFC associé à un certificat d'authenticité.

Selon un autre mode de réalisation, il est prévu un téléphone mobile comportant un système NFC tel que précédemment défini.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 précédemment décrite représente sous forme de bloc une architecture classique de chipset NFC, et des circuits sans contact avec lesquels le chipset NFC peut dialoguer,
- la figure 2 précédemment décrite illustre diverses applications d'un chipset NFC intégré dans un téléphone mobile,
- la figure 3 précédemment décrite représente sous forme de bloc l'architecture classique d'un composant NFC présent dans le chipset NFC de la figure 1,
- la figure 4 représente une séquence de personnalisation d'un chipset NFC exécutée par un fabricant de chipset NFC sur un chipset,
- la figure 5 représente une séquence d'appairage des composants du chipset NFC entre eux,
- la figure 6 représente une séquence d'établissement d'un lien de communication sécurisé entre un composant NFC et un processeur hôte sécurisé du chipset NFC,
- la figure 7 représente une séquence de téléchargement sécurisé de données entre une entité externe et un processeur hôte sécurisé du chipset NFC,
- la figure 8 illustre une variante de la séquence téléchargement représentée sur la figure 7,
- la figure 9 représente un exemple d'architecture matérielle d'un composant NFC présent dans le chipset NFC.

La figure 4 représente une séquence de personnalisation d'un chipset NFC tel que celui représenté sur la figure 3. La séquence de personnalisation fait intervenir le chipset NFC, le fabricant du chipset HM et une autorité de confiance CA. Le chipset NFC comprend un processeur hôte non sécurisé HP1, et au moins un processeur hôte sécurisé HP3 et un contrôleur NFCC ou uniquement le contrôleur NFCC si celui-ci est sécurisé.

Le fabricant HM dispose d'une paire de clés publique HPK et privée HSK. L'autorité CA dispose également d'une paire de clés publique CAPK et privée CASK. Les communications entre l'autorité CA et le fabricant HM d'une part et d'autre part, entre le fabricant et le chipset sont effectuées par tout moyen approprié. La communication entre le chipset et le fabricant HM peut être sans contact par l'intermédiaire du composant NFCR1 ou être établie au moyen d'une liaison filaire par exemple par une interface de test.

La séquence de personnalisation comprend une phase préalable d'obtention d'un certificat, et une phase de personnalisation proprement dite. La phase d'obtention d'un certificat consiste pour le fabricant HM à demander un certificat à l'autorité de confiance CA. Lors d'une première étape, le fabricant HM transmet à l'autorité CA sa clé publique HPK ainsi que des informations permettant de l'identifier d'une manière certaine. A une étape suivante, l'autorité CA vérifie les informations d'identification du fabricant reçues, et si elles sont correctes, génère (Gen. CeH) un certificat CeH à partir de la clé publique HPK. A l'étape suivante, l'autorité CA transmet le certificat CeH au fabricant HM.

La phase de personnalisation du chipset NFC comprend une première étape (Gen. NSK,PSK) de génération par un composant sécurisé du chipset, ici le processeur HP3, d'une paire de clés publique NPK et privée NSK. A l'étape suivante, le processeur hôte sécurisé HP3 envoie la clé publique NPK qu'il a générée au fabricant HM. Aux étapes suivantes, le fabricant HM génère (Gen. CeNH) un certificat CeNH, par exemple en chiffrant la clé publique NPK à l'aide de sa clé privée HSK, et génère (Gen. CID) un identifiant CID du chipset, et envoie ces éléments, éventuellement avec d'autres données, au processeur sécurisé HP3. Le certificat CeNH et l'identifiant CID sont ensuite mémorisés par le processeur sécurisé HP3.

Le chipset peut être un téléphone mobile. Dans ce cas, l'identifiant CID correspond au numéro unique IMEI (International Mobile Equipment Identity) qui est attribué à chaque téléphone mobile.

Il est à noter que les clés NPK, NSK du chipset peuvent être inscrites dans le processeur sécurisé HP3 du chipset lors de sa fabrication, au lieu d'être générées dynamiquement par le composant sécurisé. Par ailleurs, l'autorité de confiance CA peut être un opérateur (par exemple de téléphonie mobile) si tous les fabricants de chipset envoient leurs clés publiques à l'opérateur.

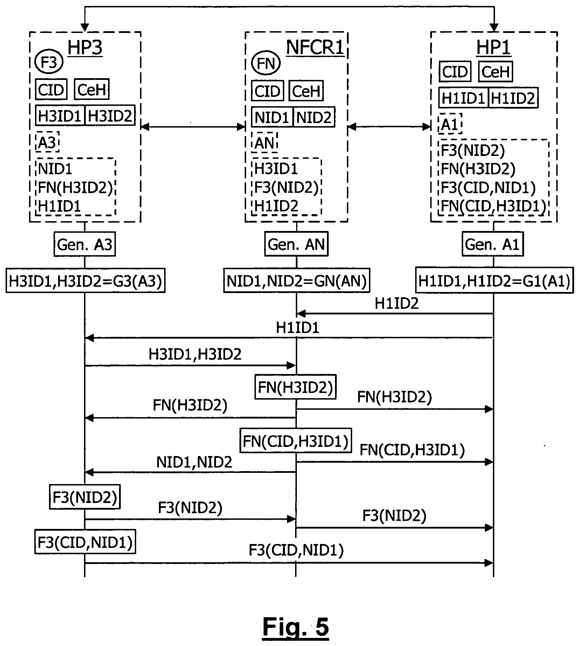

Si le composant NFR1 n'est pas sécurisé et distinct du processeur hôte HP3, les processeurs non amovibles HP1, HP3 et le composant NFCR1 du chipset peuvent exécuter une séquence d'appairage représentée sur la figure 5 de manière à empêcher qu'aucun de ces composants ne soit remplacé frauduleusement par un composant non sécurisé. Cette séquence est exécutée une seule fois lors du test du chipset par le fabricant du chipset.

Au cours de premières étapes de la séquence d'appairage, les processeurs HP1, HP3 et le composant NFCR1 génèrent en parallèle un nombre aléatoire A1, A3, AN, et à partir de ce nombre aléatoire, deux parties d'une clé d'identification, à savoir H1ID1 et H1ID2 pour le processeur HP1, H3ID1 et H3ID2 pour le processeur HP3, et NID1 et NID2 pour le composant NFCR1. La génération de chaque clé d'identification à partir d'un nombre aléatoire peut être effectuée par exemple à l'aide d'une fonction cryptographique telle que RSA ou DES appliquée au nombre aléatoire, en extrayant un mot d'un certain nombre de bits du résultat obtenu, par exemple 1024 bits, et en divisant le mot en deux parties (de 512 bits chacun dans l'exemple ci-dessus).

Aux étapes suivantes, le processeur hôte HP1 transmet la première partie H1ID1 de sa clé au processeur hôte sécurisé HP3, et la seconde partie H1ID2 au composant NFCR1. Aux étapes suivantes, le processeur HP3 transmet les deux parties H3ID1, H3ID2 de sa clé au composant NFCR1. Aux étapes suivantes, le composant NFCR1 applique une fonction cryptographique FN à la seconde partie N3ID2 de la clé reçue et transmet le résultat FN(N3ID2) aux processeurs HP1 et HP3. A l'étape suivante, le composant NFCR1 applique la fonction cryptographique FN à la première partie H3ID1 de la clé reçue et à l'identifiant CID du chipset. A l'étape suivante, la valeur FN(CID, H3ID1) obtenue est transmise au processeur HP1. A l'étape suivante, le composant NFCR1 transmet à son tour les deux parties NID1, NID2 de sa clé au processeur hôte HP3. Aux étapes suivantes, le processeur hôte HP3 applique une fonction cryptographique F3 à la seconde partie NID2 de la clé reçue et transmet le résultat F3(NID2) au composant NFCR1 ainsi qu'au processeur HP1. Aux étapes suivantes, le processeur HP3 applique la fonction cryptographique F3 à la première partie NID1 de la clé reçue et à l'identifiant du chipset CID et transmet le résultat F3(CID, NID1) au processeur HP1.

A la fin de cette séquence d'appairage, le processeur hôte HP1 qui n'est pas sécurisé mémorise les valeurs suivantes : F3(NID2), FN(H3ID2), F3(CID,NID1) et FN(CID,H3ID1) ; le processeur hôte sécurisé HP3 mémorise les valeurs suivantes : NID1, FN(H3ID2) et H1ID1, et le composant NFCR1 mémorise les valeurs suivantes : H3ID1, F3(NID2) et H1ID2.

De cette manière, toutes les clés des trois entités, à savoir des deux processeurs hôtes HP1, HP3 et du composant NFCR1 sont réparties et partagées entre ces trois entités. Si lors de l'utilisation du chipset ou de transmissions de données entre ces trois entités, les valeurs mémorisées sont transmises aux autres entités, chaque entité peut vérifier que les données reçues proviennent bien de l'une des entités à laquelle elle a été appairée lors de la fabrication du chipset. Ainsi, si le processeur hôte HP1 transmet au processeur hôte HP3 la valeur F3(CID,NID1), le processeur HP3 peut vérifier cette valeur en appliquant la fonction cryptographique F3 aux valeurs NID1 et CID qu'il mémorise. De même, si le processeur HP1 transmet au composant NFCR1 la valeur FN(CID,H3ID1), le composant NFCR1 peut vérifier cette valeur en appliquant la fonction FN aux valeurs CID et H3ID1 qu'il mémorise. Réciproquement, si le composant NFCR1 envoie la valeur H3ID2 au processeur HP3, le processeur HP3 peut comparer cette valeur à celle qu'il mémorise. Si la valeur reçue par une entité ne correspond pas à une valeur mémorisée, l'entité réceptrice peut décider de ne pas communiquer avec l'entité émettrice.

Il est à noter que la séquence d'appairage peut être exécutée selon les besoins uniquement entre le processeur hôte HP3 et le composant NFCR1 ou uniquement entre le processeur HP1 et le composant NFCR1 si celui-ci est sécurisé. Dans ce cas, il suffit de supprimer dans la séquence les étapes qui concernent le troisième composant.

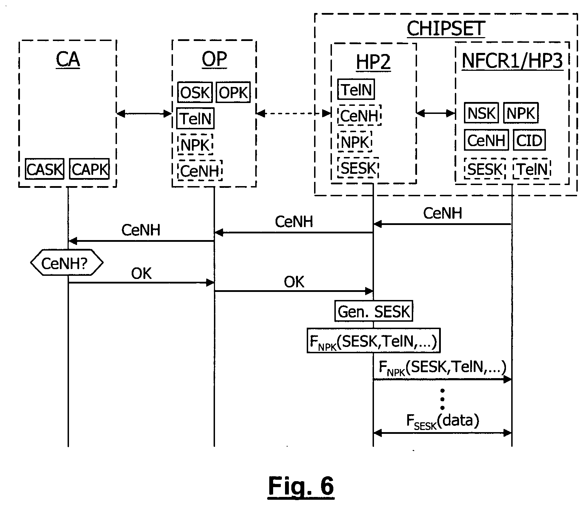

La figure 6 représente une séquence d'établissement d'une liaison sécurisée entre le processeur sécurisé HP3 personnalisé par le fabricant et un autre processeur hôte sécurisé HP2 du chipset. La séquence d'établissement d'une liaison sécurisée fait intervenir le chipset NFC, un opérateur OP et l'autorité de confiance CA. L'opérateur OP dispose d'une paire de clés publique OPK et privée OSK. Les communications entre l'autorité CA et l'opérateur OP, d'une part et d'autre part, entre l'opérateur et le chipset sont effectuées par tout moyen approprié. Le lien de communication entre le processeur hôte HP2 et l'opérateur OP est sécurisé, c'est-à-dire que les données échangées sont chiffrées avant d'être transmises, le processeur hôte sécurisé HP2 étant fourni par l'opérateur OP à l'utilisateur du chipset. La communication entre les processeurs HP2 et HP3 est établie par l'intermédiaire du composant NFCR1 et en particulier du contrôleur NFCC.

Dans le cas où le chipset est un téléphone mobile, l'opérateur OP est un opérateur de téléphonie mobile et le processeur hôte HP2 est la carte SIM qui est installée dans le téléphone mobile. Le processeur hôte HP2 partage alors une clé de chiffrement, le numéro de téléphone TelN et d'autres paramètres du téléphone mobile avec l'opérateur.

A la première étape de la séquence d'établissement d'une liaison sécurisée, le processeur sécurisé HP3 transmet le certificat CeNH (contenant la clé publique NPK) au processeur hôte HP2. A l'étape suivante, le processeur hôte HP2 transmet d'une manière chiffrée les informations reçues à l'opérateur OP. A l'étape suivante, l'opérateur OP transmet pour vérification le certificat reçu CeNH à l'autorité CA. A l'étape suivante (CeNH?), l'autorité CA vérifie le certificat reçu grâce à la clé publique HPK du fabricant du chipset enregistrée lors de la génération du certificat CeH (étape "Gen. CeH" sur la figure 4). Si le certificat reçu est valide, l'autorité CA transmet à l'opérateur OP un message de validation (OK). A l'étape suivante, l'opérateur OP retransmet de message de validation au processeur hôte HP2. De cette manière, le processeur hôte HP2 et l'opérateur vérifient que le chipset NFC auquel le processeur hôte est connecté est valide. Si tel est le cas, le processeur hôte HP2 peut établir une communication sécurisée avec le chipset. Aux étapes suivantes, le processeur hôte HP2 génère (Gen. SESK) une clé de session SESK et chiffre la clé de session avec, le cas échéant, d'autres informations de personnalisation comme le numéro de téléphone TelN, à l'aide d'une fonction cryptographique F_{NPK} utilisant la clé publique NPK du processeur sécurisé HP3. La génération de la clé de session SESK est par exemple effectuée à l'aide d'une fonction de génération de nombres aléatoires. A l'étape suivante, le processeur HP2 transmet le résultat du chiffrement au processeur sécurisé HP3. A l'étape suivante, le processeur sécurisé HP3 déchiffre les informations reçues à l'aide de la clé privée NSK et obtient ainsi la clé de session SESK et les autres informations TelN ainsi transmises de manière sécurisée. Le processeur sécurisé HP3 et le processeur HP2 peuvent ensuite échanger des informations d'une manière sécurisée en chiffrant au préalable les informations à transmettre à l'aide d'une fonction cryptographique F_{SESK} utilisant la clé de session SESK partagée uniquement par les processeurs sécurisés HP2 et HP3.

Il est à noter que la génération de la clé de session SESK et son chiffrement peuvent être effectués par l'opérateur OP. Dans ce cas, la présence du processeur hôte HP2 n'est pas nécessaire dans cette séquence. Il importe simplement qu'une liaison sécurisée soit établie entre le chipset et l'opérateur. Ainsi, la séquence d'établissement d'une liaison sécurisée s'applique également aux téléphones mobiles sans carte SIM comme les téléphones de type CDMA (Code Division Multiple Access).

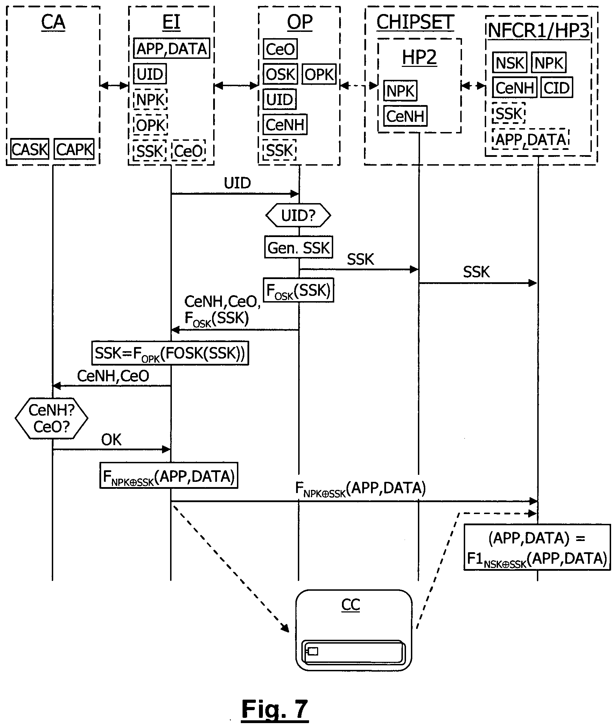

La figure 7 représente une séquence de téléchargement sécurisé de données DATA, et plus particulièrement d'un programme applicatif APP, entre une entité externe EI et le processeur sécurisé HP3 du chipset NFC, par l'intermédiaire du composant NFCR1 et d'une liaison sans contact établie par le composant NFCR1. Les données et/ou le programme applicatif permettent d'accéder ou d'opérer un service, par exemple un service de paiement ou de transport fourni par l'entité externe EI.

Par souci de clarté, le terme "données" sera utilisé pour désigner des données et/ou un ou plusieurs programmes applicatifs dans la suite de la description et les revendications.

La séquence de téléchargement fait intervenir le chipset NFC, l'opérateur OP, l'autorité de confiance CA et l'entité EI fournissant les données et/ou le programme applicatif à télécharger. L'opérateur OP dispose d'une paire de clés publique OPK et privée OSK. Les communications entre l'autorité CA, l'entité EI et l'opérateur OP sont effectuées par tout moyen approprié. Le lien de communication entre le processeur hôte HP2 et l'opérateur OP est sécurisé, c'est-à-dire que les données échangées sont chiffrées avant d'être transmises, le processeur hôte sécurisé HP2 étant fourni par l'opérateur OP à l'utilisateur du chipset. Le lien de communication entre le processeur HP2 et le processeur sécurisé HP3 est également sécurisé, par exemple à l'aide de la séquence décrite précédemment en référence à la figure 6. Le lien de communication entre les processeurs HP2 et HP3 peut également être sécurisé par un chiffrement utilisant, pour chaque transmission de données, à la fois la clé privée du processeur émetteur et la clé publique du processeur destinataire. De cette manière, seul le processeur destinataire peut déchiffrer les données transmises et il est certain que celles-ci sont émises par le processeur censé lui envoyer les données.

Lors d'une première étape, l'entité EI transmet pour vérification à l'opérateur OP des informations UID identifiant l'utilisateur du chipset souhaitant télécharger les informations DATA,APP sur son chipset NFC. A l'étape suivante (UID?), l'opérateur OP recherche des informations d'acheminement de données vers le chipset, en fonction des informations UID. Si les informations d'identification UID correspondent à un utilisateur référencé, l'opérateur génère (Gen. SSK) une clé de session SSK. La génération de la clé de session est par exemple effectuée à l'aide d'une fonction de génération de nombres aléatoires. Aux étapes suivantes, la clé de session SSK est transmise de manière sécurisée de l'opérateur OP au processeur sécurisé HP3, par l'intermédiaire du processeur HP2, en utilisant les informations d'acheminement correspondant aux informations d'identification UID.

Parallèlement, la clé de session SSK est chiffrée par l'opérateur OP à l'aide d'une fonction cryptographique F_{OSK} utilisant la clé secrète OSK, puis transmise à l'entité EI avec le certificat du chipset CeNH et le certificat de l'opérateur CeO. Le chiffrement de la clé de session SSK par une clé secrète correspond à la génération d'une signature électronique, sachant que l'opération inverse de déchiffrement peut être effectuée par n'importe qui puisque la clé de déchiffrement correspondante est la clé publique OPK de l'opérateur.

Aux étapes suivantes, l'entité EI déchiffre la clé de session SSK à l'aide d'une fonction cryptographique F_{OPK} utilisant la clé publique OPK de l'opérateur OP, et extrait des certificats CeNH et CeO les clés publique NPK et OPK du processeur hôte HP3 et de l'opérateur OP, en utilisant la clé publique CAPK de l'autorité CA. L'entité EI transmet ensuite les certificats CeH et CeO reçus pour vérification à l'autorité de confiance CA. Aux étapes suivantes (CeNH?, CeO?), l'autorité CA vérifie les certificats CeH et CeO et s'ils sont valides, transmet à l'entité EI un message de validation OK. Aux étapes suivantes, l'entité EI chiffre les données DATA et/ou le programme applicatif APP à télécharger à l'aide d'une fonction cryptographique F_{NPK⊕SSK} utilisant la clé publique NPK du processeur sécurisé HP3 et la clé de session SSK, et transmet le résultat du chiffrement au processeur sécurisé HP3. Le chiffrement appliqué peut être un double chiffrement utilisant comme clés de chiffrement successives la clé publique NPK et la clé de session SSK, ou un chiffrement unique utilisant comme clé de chiffrement une combinaison des deux clés NPK et SSK, par exemple obtenue à l'aide de la fonction OU exclusif appliquée aux deux clés NPK, SSK. Le résultat du chiffrement est ensuite transmis par l'entité EI au processeur sécurisé HP3 qui déchiffre les informations reçues à l'aide d'une fonction cryptographique F1_{NSK⊕SSK} utilisant la clé de session SSK et la clé privée NSK du processeur HP3. De cette manière les données DATA et/ou le programme applicatif APP ont été téléchargés d'une manière sécurisée dans le processeur HP3, sans que l'opérateur OP puisse déchiffrer les informations transmises puisqu'il ne dispose pas de la clé privée NSK.

Il est à noter que la séquence de la figure 7 peut être exécutée sans faire intervenir le processeur hôte HP2.

Le téléchargement du programme applicatif APP et/ou des données chiffrés peut être effectué par l'intermédiaire de l'opérateur OP, puis du processeur hôte HP1, si l'opérateur est un opérateur de téléphonie mobile et si le processeur HP1 est le circuit de bande de base d'un téléphone mobile. Le téléchargement peut alternativement être effectué à l'aide d'une carte à circuit intégré CC, de préférence à lecture sans contact, telle qu'une carte bancaire dans laquelle l'entité EI a chargé le programme applicatif APP et/ou les données chiffrés, ainsi que la clé de session SSK et la clé publique du processeur HP3. La carte CC est ensuite remise à l'utilisateur du chipset qui la dispose à proximité du chipset de manière à établir une communication sans contact entre la carte et le chipset qui fonctionne alors en mode lecteur, et à réaliser le téléchargement souhaité.

La carte CC peut également servir à authentifier, valider ou activer une application chargée dans le processeur hôte HP3. Elle peut ainsi par exemple servir à activer un seuil limite de paiement.

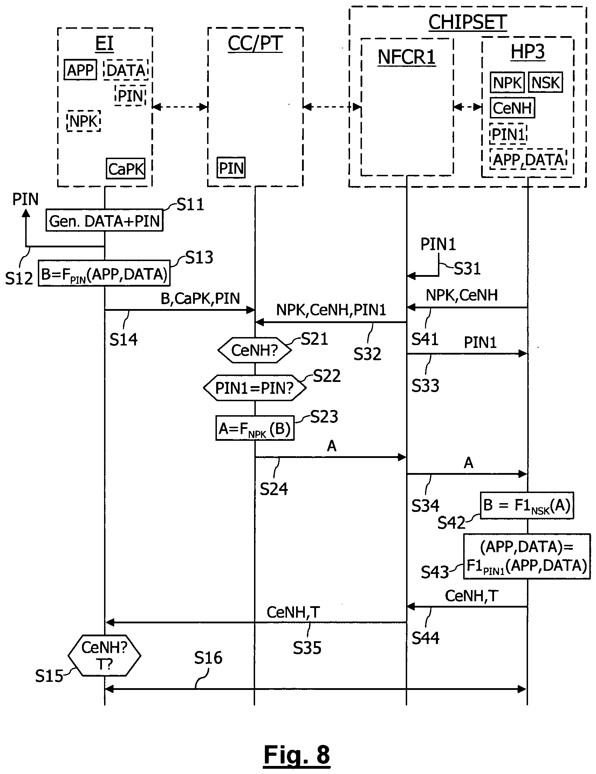

La figure 8 représente une autre séquence de téléchargement sécurisé de données personnalisées DATA, et éventuellement d'un programme applicatif APP, entre une entité externe EI et le processeur sécurisé HP3 du chipset NFC, par l'intermédiaire du composant NFCR1 et d'une liaison sans contact établie par le composant NFCR1. Les données et/ou le programme applicatif permettent d'accéder ou d'opérer un service, par exemple un service de paiement ou de transport fourni par l'entité externe.

La séquence de téléchargement fait intervenir le chipset NFC, l'entité EI (un serveur de l'entité EI) fournissant les données personnalisées DATA et éventuellement le programme applicatif APP à télécharger, et un relais de transmission intermédiaire tel la carte à circuit intégré CC pouvant être à lecture sans contact, ou une borne en communication PT avec l'entité EI. Les communications entre la carte CC ou la borne PT et le chipset NFC sont effectuées par une liaison sans contact. Les communications entre la carte CC et l'entité EI peuvent également être effectuées par une liaison sans contact. Les communications entre la borne PT et l'entité EI peuvent être effectuées par tout moyen approprié tel qu'un réseau de transmission de données.

Dans la séquence représentée sur la figure 8, l'entité EI exécute tout d'abord des étapes S11 à S14.

Dans le cas où le relais CC/PT est une borne, l'utilisateur doit préalablement s'identifier auprès de la borne. L'identification d'un utilisateur déclenche l'exécution des étapes S11 à S14.

A l'étape S11, l'entité EI génère des données personnalisées DATA spécifiques d'un utilisateur pour une application APP, incluant un code PIN. A l'étape S12, l'entité EI fournit le code PIN à l'utilisateur par tout moyen approprié offrant une certaine sécurité, comme une transmission par courrier postal. A l'étape S13, l'entité EI chiffre les données personnalisées DATA et l'application APP en utilisant le code PIN comme clé de chiffrement. A l'étape S14, les données chiffrées B sont fournies au relais de transmission CC/PT avec une clé publique CaPK d'une autorité de certification, et le code PIN. Dans le cas où le relais de transmission est la carte CC, la carte est remise à l'utilisateur.

Par ailleurs, à une étape S31, un code PIN1 est introduit par l'utilisateur dans le système NFC, ce code étant fourni au composant NFCR1. A une étape S41, le processeur hôte HP3 transmet sa clé publique NPK et le certificat associé CeNH au composant NFCR1. A une étape S32, le composant NFCR1 transmet le code PIN1, la clé publique NPK et le certificat CeNH au relais de transmission CC/PT. A l'étape S33, le composant NFCR1 retransmet le code PIN1 au processeur hôte HP3.

A la réception des données PIN1, NPK, CeNH du composant NFCR1 et des données B, CaPK de l'entité EI, le relais de transmission CC/PT exécute des étapes S21 à S24. Aux étapes S21 et S22, le relais CC/PT vérifie le certificat CeNH à l'aide de la clé publique CaPK et que le code PIN qu'il a reçu de l'entité EI correspond au code PIN1 reçu du composant NFCR1. Si ces vérifications révèlent une erreur, l'exécution de la séquence n'est pas poursuivie. Dans le cas contraire, le relais de transmission CC/PT chiffre les données chiffrées B à l'étape S23, pour obtenir des données chiffrées A. A l'étape S24, les données chiffrées A sont transmises au composant NFCR1. A l'étape S34, le composant NFCR1 retransmet les données chiffrées A au processeur hôte HP3. Le processeur HP3 exécute alors les étapes S42 à S44. A l'étape S42, le processeur HP3 déchiffre les données A en utilisant la clé NSK correspondant à la clé publique NPK, pour obtenir les données chiffrées B. A l'étape S43, le processeur HP3 déchiffre les données B à l'aide du code PIN1 (correspondant au code PIN), pour obtenir l'application APP et les données DATA. A l'étape S45, le processeur HP3 exécute l'application APP, ce qui déclenche l'envoie du certificat CeNH et des données de transaction personnalisées T au composant NFCR1. A l'étape S35, le composant NFCR1 retransmet les données reçues (CeNH, T) à l'entité EI. Cette transmission peut être effectuée par l'intermédiaire d'une borne, telle que la borne PT, en communication avec l'entité EI et disposant de moyens pour établir une liaison sans contact avec le composant NFCR1. A l'étape S15, l'entité EI vérifie le certificat CeNH et les données de transaction T et si ces données (CeNH, T) sont correctes, elle valide l'exécution de l'application APP à l'étape S16.

Il est à noter également que l'étape de chiffrement S13 peut être omise, les données DATA et l'application APP étant fournies ainsi directement au relais de transmission CC/PT. Dans ce cas, l'étape S43 doit également être omise, et il peut être prévu une introduction du code PIN par l'utilisateur pour activer l'application, l'entité EI vérifiant le code fourni par l'utilisateur avant d'autoriser l'activation de l'application.

Le relais CC/PT peut également être omis. Dans ce cas, l'entité EI communique directement avec le chipset NFC, par exemple par une liaison de téléphonie mobile, si le chipset est un téléphone ou un terminal mobile. Les étapes S21 à S24 sont alors exécutées par l'entité EI, et l'étape S14 n'est pas nécessaire.

Par ailleurs, l'application APP peut être transmise au processeur hôte HP3 par d'autres moyens, pas nécessairement sécurisés, dès lors que l'application doit être associée à des données personnalisées DATA spécifiques d'un utilisateur pour pouvoir être exécutée, les données DATA étant transmises par ailleurs par une voie sécurisée.

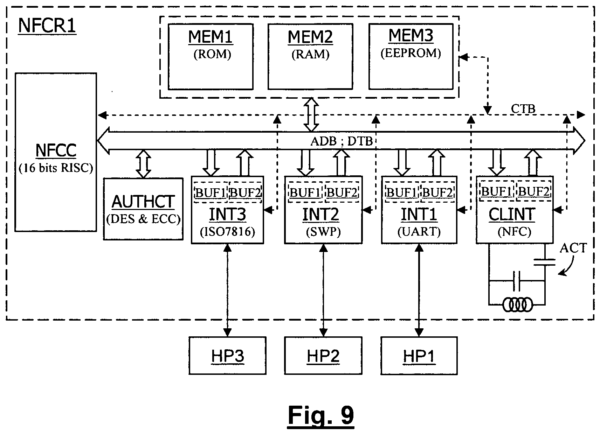

La figure 9 représente un exemple d'architecture matérielle du composant NFCR1 utilisé pour mettre en oeuvre les séquences des figures 5, 6, 7 et 8. Le composant NFCR1 comprend :
- le contrôleur NFCC et l'interface CLINT déjà décrits,
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM permettant d'enregistrer la donnée secrète K2 et la clé de session SK,
- un circuit d'authentification et de correction d'erreur AUTHCT comprenant des algorithmes DES (Data Encryption Standard) et ECC (Elliptic Curve Cryptography), ou d'autres algorithmes de cryptographie,
- un port de connexion INT1 de type UART (Universal Asynchronous Receiving Transmitting), auquel le processeur hôte HP1 est ici connecté,
- un port de connexion INT2 de type SWP (Single Wire Protocol) auquel le processeur hôte HP2 est ici connecté (le processeur HP2 étant supposé ici être une carte SIM),
- un port de connexion INT3, par exemple de type ISO7816 permettant de connecter le processeur hôte HP3,
- un bus de données DTB et un bus d'adresse ADB reliant le plan mémoire, le contrôleur NFCC, l'interface CLINT et les ports INT1, INT2, INT3, et
- un bus de contrôle CTB permettant au contrôleur NFCC de contrôler et d'accéder à ces divers éléments en lecture et/ou écriture.

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le contrôleur NFCC ou l'interface CLINT s'effectue ainsi par blocs de données de la taille des tampons BUF1, BUF2, et est cadencé par le contrôleur NFCC.

L'invention n'est pas non plus limitée à un chipset comportant un composant NFC. D'autres moyens de communication peuvent être envisagés comme des moyens de communication sans fil tel que Bluetooth, Wifi, UWB (Ultra Wide Band) ou une liaison infrarouge, ou encore des moyens de communication filaires par exemple conformes à la norme USB.

Par ailleurs, l'entité fournissant les données à télécharger peut être confondue avec l'opérateur mettant en oeuvre la communication sécurisée avec le processeur hôte HP2, de sorte que l'entité qui fournit les données à télécharger APP, DATA est celle qui fournit également la clé de chiffrement SSK des données au processeur hôte HP3.

L'invention couvre également le chargement de données et de programmes applicatifs dans un système ayant un seul processeur hôte et pouvant exécuter plusieurs applications.

## Revendications

1. Procédé de chargement sécurisé de données dans un processeur hôte sécurisé (HP3) d'un système de type Near Field Communication NFC (Chipset),
**caractérisé en ce qu'**il comprend des étapes consistant à :
- générer une donnée secrète (SSK, PIN),
- déterminer un système NFC (Chipset) destinataire de la donnée secrète à partir d'un identifiant de l'utilisateur (UID), le système NFC comportant un circuit d'interface NFC (CLINT) d'émission et de réception de données,
- transmettre la donnée secrète à un premier processeur hôte (HP3) du système NFC destinataire, par l'intermédiaire d'une première liaison établie en fonction de l'identifiant de l'utilisateur ou par l'intermédiaire de l'utilisateur,
- chiffrer des données (APP, DATA) à charger dans le premier processeur hôte en utilisant une clé publique (NPK) du premier processeur hôte,
- transmettre les données chiffrées au premier processeur hôte par l'intermédiaire d'une seconde liaison indépendante de la première, établie en fonction de l'identifiant de l'utilisateur ou par l'intermédiaire de l'utilisateur, et
- déchiffrer par le premier processeur hôte les données chiffrées à l'aide d'une clé privée (NSK) correspondant à la clé publique du premier processeur hôte, l'une ou l'autre des étapes de transmission et de déchiffrement des données chiffrées n'étant pas effectuée si la donnée secrète reçue (SSK, PIN1) par le premier processeur hôte ne correspond pas à la donnée secrète générée (SSK, PIN).

2. Procédé selon la revendication 1, comprenant des étapes de chiffrement des données (APP, DATA) à charger dans le processeur hôte (HP3) à l'aide de la donnée secrète (SSK, PIN), avant d'être transmises au processeur hôte, et de déchiffrement des données chiffrées, à l'aide de la donnée secrète par le processeur hôte.

3. Procédé selon la revendication 1 ou 2, comprenant des étapes préalables d'authentification du système NFC (Chipset) et d'un opérateur (OP) générant la donnée secrète (SSK).

4. Procédé selon la revendication 3, dans lequel l'authentification du système NFC (Chipset) et de l'opérateur (OP) est effectuée par un fournisseur de service (EI) fournissant les données (APP, DATA) à charger dans le processeur hôte (HP3), en vérifiant des certificats (CeNH, CeO) auprès d'une autorité de confiance (CA).

5. Procédé selon l'une des revendications 1 à 4, dans lequel la donnée secrète (PIN) est transmise au système NFC (Chipset) destinataire par l'utilisateur du système NFC, qui reçoit la donnée secrète et l'introduit dans le système NFC.

6. Procédé selon l'une des revendications 1 à 4, dans lequel la donnée secrète (SSK) est transmise sous forme signée par un opérateur (OP) ayant généré la donnée secrète, et la signature étant vérifiée par un fournisseur de service (EI) fournissant les données (APP, DATA) à charger dans le premier processeur hôte (HP3).

7. Procédé selon l'une des revendications 1 à 6, dans lequel les données à charger (APP, DATA) sont transmises sous forme chiffrée au système NFC (Chipset) par l'intermédiaire d'un réseau de téléphonie mobile, et par l'intermédiaire d'un circuit de base de téléphone mobile (HP1).

8. Procédé selon l'une des revendications 1 à 6, dans lequel les données à charger (APP, DATA) sont transmises sous forme chiffrée au système NFC (Chipset) par l'intermédiaire d'une carte à circuit intégré (CC) à lecture sans contact communiquant avec le circuit d'interface NFC (CLINT).

9. Procédé selon l'une des revendications 1 à 8, dans lequel la première liaison est réalisée par l'intermédiaire d'un second processeur hôte sécurisé (HP2) du système NFC (Chipset).

10. Procédé selon l'une des revendications 1 à 4 et 6 à 9, dans lequel l'établissement de la première liaison de communication sécurisée est réalisé entre le premier processeur hôte (HP3) et un opérateur (OP) ayant généré la donnée secrète (SSK) et comprend des étapes de :
- authentification du système NFC (Chipset) par une autorité de confiance (CA),
- génération d'une clé de session (SESK),
- chiffrement de la clé de session à l'aide d'une clé publique (HPK) du premier processeur hôte,
- transmission de la clé de session chiffrée au premier processeur hôte, et
- déchiffrement de la clé de session par le premier processeur hôte à l'aide d'une clé privée (NSK) correspondant à la clé publique (NPK) du premier processeur hôte, la clé de session étant ensuite utilisée pour chiffrer des données transmises entre le premier processeur hôte et l'opérateur.

11. Procédé selon la revendication 10, dans lequel la clé de session (SESK) est générée par un second processeur hôte sécurisé (HP2) du système NFC (Chipset).

12. Procédé selon l'une des revendications 1 à 11, comprenant des étapes initiales de réception par le premier processeur hôte (HP3) d'un certificat d'authenticité (CeNH), une liaison de communication sécurisée étant établie avec un opérateur (OP, EI), après vérification du certificat d'authenticité et uniquement si le certificat est valide.

13. Procédé selon l'une des revendications 1 à 12, comprenant des étapes d'échange de données secrètes entre un contrôleur (NFCC) connecté au circuit d'interface NFC (CLINT), le premier processeur hôte (HP3) et un troisième processeur hôte non sécurisé (HP1) du système NFC (Chipset), une liaison de communication entre le contrôleur, et les premier et troisième processeurs hôtes étant établie qu'après une vérification des données secrètes et uniquement si la vérification ne révèle pas d'erreur.

14. Procédé selon l'une des revendications 1 à 13, comprenant des étapes initiales de transmission au premier processeur hôte (HP3) d'un identifiant unique (CID) associé à un certificat d'authenticité (CeNH), qui sont mémorisés par le premier processeur hôte.

15. Procédé selon l'une des revendications 1 à 14, comprenant des étapes de vérification que la donnée secrète reçue (PIN1) par le processeur hôte (HP3) correspond à la donnée secrète générée (PIN), la transmission des données chiffrées (APP, DATA) n'étant pas effectuée si la vérification révèle une erreur.

16. Système de fourniture d'un service comprenant une entité (EI, OP) fournissant un service et plusieurs systèmes de type Near Field Communication NFC (Chipset) comportant chacun un premier processeur hôte sécurisé (HP3) connecté à un circuit d'interface NFC (CLINT) assurant l'émission et la réception de données, pour accéder au service,
**caractérisé en ce que** :
l'entité (EI, OP) est configurée pour générer une donnée secrète (SSK, PIN), déterminer un système NFC (Chipset) destinataire de la donnée secrète à partir d'un identifiant de l'utilisateur (UID), et chiffrer des données (APP, DATA) à charger dans le premier processeur hôte en utilisant une clé publique (NPK) du premier processeur hôte,
le système de fourniture de service est configuré pour transmettre la donnée secrète au premier processeur hôte (HP3) du système NFC destinataire, par l'intermédiaire d'une première liaison établie en fonction de l'identifiant de l'utilisateur ou par l'intermédiaire de l'utilisateur, et transmettre les données chiffrées au premier processeur hôte par l'intermédiaire d'une seconde liaison indépendante de la première, établie en fonction de l'identifiant de l'utilisateur ou par l'intermédiaire de l'utilisateur, et
le premier processeur hôte (HP3) est configuré pour déchiffrer les données chiffrées reçues à l'aide d'une clé privée (NSK) correspondant à la clé publique (NPK) du premier processeur hôte, la transmission des données chiffrées au premier processeur hôte, ou le déchiffrement des données chiffrées n'étant pas effectué si la donnée secrète reçue (SSK, PIN1) par le premier processeur hôte ne correspond pas à la donnée secrète générée (SSK, PIN).

17. Système selon la revendication 16, dans lequel le premier processeur hôte (HP3) est configuré pour déchiffrer les données reçues à l'aide de la donnée secrète (SSK, PIN).

18. Système selon l'une des revendications 16 et 17, dans lequel le système NFC destinataire comprend un circuit de base de téléphone mobile (HP1) configuré pour recevoir sous forme chiffrée les données à charger (APP, DATA) et les transmettre au premier processeur hôte (HP3).

19. Système selon l'une des revendications 16 à 18, dans lequel l'interface NFC (CLINT) du système NFC destinataire est configurée pour recevoir les données à charger (APP, DATA) sous forme chiffrée, transmises par une carte à circuit intégré (CC) à lecture sans contact, et les transmettre au processeur hôte (HP3).

20. Système selon l'une des revendications 16 à 19, dans lequel le système NFC destinataire comprend un second processeur hôte sécurisé (HP2) susceptible d'être connecté de manière sécurisée à l'opérateur (OP), et configuré pour générer une clé de session (SESK), chiffrer la clé de session à l'aide d'une clé publique (NPK) du premier processeur hôte (HP3), et transmettre la clé de session chiffrée au premier processeur hôte, le premier processeur hôte étant configuré pour déchiffrer la clé de session à l'aide d'une clé privée (NSK) correspondant à la clé publique du premier processeur hôte, la clé de session étant ensuite utilisée pour chiffrer des données transmises entre le premier et le second processeur hôte.

21. Système selon l'une des revendications 16 à 20, dans lequel le système NFC destinataire comprend un contrôleur (NFCC) connecté au circuit d'interface NFC (CLINT), et dans lequel le premier processeur hôte (HP3), le contrôleur (NFCC) et un troisième processeur hôte non sécurisé (HP1), sont configurés pour échanger des données secrètes, une liaison de communication entre le contrôleur, le premier et le troisième processeur hôte étant établie qu'après une vérification des données secrètes et uniquement si la vérification ne révèle pas d'erreur.

22. Système selon l'une des revendications 16 à 21, dans lequel le processeur hôte (HP3) est configuré pour recevoir et mémoriser durant une phase de personnalisation un identifiant unique (CID) du système NFC (Chipset) associé à un certificat d'authenticité (CeNH).

23. Système selon l'une des revendications 16 à 22, dans lequel le système NFC destinataire est inclus dans un téléphone mobile.

## Patentansprüche

1. Verfahren zum gesicherten Laden von Daten in einen gesicherten Hostprozessor (HP3) eines Systems vom Typ Nahfeldkommunikation (Near Field Communication, NFC) (Chipsatz),
**dadurch gekennzeichnet, dass** es Schritte umfasst, die in Folgendem bestehen:
- Erzeugen eines geheimen Datenelements (SSK, PIN),
- Bestimmen eines NFC-Zielsystems (Chipsatz) des geheimen Datenelements aus einer Kennung des Benutzers (UID), wobei das NFC-System eine NFC-Schnittstellenschaltung (CLINT) zum Senden und zum Empfang von Daten aufweist,
- Übertragen des geheimen Datenelements zu einem ersten Hostprozessor (HP3) des NFC-Zielsystems über eine erste Verbindung, die in Abhängigkeit von der Kennung des Benutzers oder über den Benutzer hergestellt wurde,
- Verschlüsseln der Daten (APP, DATA), die in den ersten Hostprozessor zu laden sind, unter Verwendung eines öffentlichen Schlüssels (NPK) des ersten Hostprozessors,
- Übertragen der verschlüsselten Daten zu dem ersten Hostprozessor über eine zweite Verbindung, die von der ersten unabhängig ist und in Abhängigkeit von der Kennung des Benutzers oder über den Benutzer hergestellt wurde, und
- Entschlüsseln, durch den ersten Hostprozessor, der verschlüsselten Daten mithilfe eines privaten Schlüssels (NSK), der dem öffentlichen Schlüssel des ersten Hostprozessors entspricht, wobei der eine oder der andere der Schritte der Übertragung und der Entschlüsselung der verschlüsselten Daten nicht ausgeführt wird, falls das durch den ersten Hostprozessor empfangene geheime Datenelement (SSK, PIN1) nicht dem erzeugten geheimen Datenelement (SSK, PIN) entspricht.

2. Verfahren nach Anspruch 1, welches Schritte der Verschlüsselung der in den Hostprozessor (HP3) zu ladenden Daten (APP, DATA) mithilfe des geheimen Datenelements (SSK, PIN), bevor sie zu dem Hostprozessor übertragen werden, und der Entschlüsselung der verschlüsselten Daten mithilfe des geheimen Datenelements durch den Hostprozessor umfasst.

3. Verfahren nach Anspruch 1 oder 2, welches vorangehende Schritte der Authentifizierung des NFC-Systems (Chipsatz) und eines Betreibers (OP), der das geheime Datenelement (SSK) erzeugt, umfasst.

4. Verfahren nach Anspruch 3, wobei die Authentifizierung des NFC-Systems (Chipsatz) und des Betreibers (OP) von einem Dienstanbieter (EI) durchgeführt wird, der die in den ersten Hostprozessor (HP3) zu ladenden Daten (APP, DATA) liefert, indem er die Zertifikate (CeNH, CeO) bei einer vertrauenswürdigen Zertifizierungsstelle (CA) überprüft.

5. Verfahren nach einem der Ansprüche 1 bis 4, wobei das geheime Datenelement (PIN) zu dem NFC-Zielsystem (Chipsatz) durch den Benutzer des NFC-Systems übertragen wird, welcher das geheime Datenelement empfängt und es in das NFC-System einführt.

6. Verfahren nach einem der Ansprüche 1 bis 4, wobei das geheime Datenelement (SSK) in signierter Form durch einen Betreiber (OP) übertragen wird, der das geheime Datenelement erzeugt hat, und wobei die Signatur durch einen Dienstanbieter (EI) überprüft wird, der die in den ersten Hostprozessor (HP3) zu ladenden Daten (APP, DATA) liefert.

7. Verfahren nach einem der Ansprüche 1 bis 6, wobei die zu ladenden Daten (APP, DATA) in verschlüsselter Form zu dem NFC-System (Chipsatz) über ein Mobiltelefonnetz und über eine Basisbandschaltung eines Mobiltelefons (HP1) übertragen werden.

8. Verfahren nach einem der Ansprüche 1 bis 6, wobei die zu ladenden Daten (APP, DATA) in verschlüsselter Form zu dem NFC-System (Chipsatz) über eine kontaktlos lesbare Karte mit integrierter Schaltung (CC) übertragen werden, die mit der NFC-Schnittstellenschaltung (CLINT) kommuniziert.

9. Verfahren nach einem der Ansprüche 1 bis 8, wobei die erste Verbindung über einen zweiten gesicherten Hostprozessor (HP2) des NFC-Systems (Chipsatz) realisiert wird.

10. Verfahren nach einem der Ansprüche 1 bis 4 und 6 bis 9, wobei die Herstellung der ersten gesicherten Kommunikationsverbindung zwischen dem ersten Hostprozessor (HP3) und einem Betreiber (OP) realisiert wird, der das geheime Datenelement (SSK) erzeugt hat, und die folgenden Schritte umfasst:
- Authentifizierung des NFC-Systems (Chipsatz) durch eine vertrauenswürdige Zertifizierungsstelle (CA),
- Erzeugung eines Sitzungsschlüssels (SESK),
- Verschlüsselung des Sitzungsschlüssels mithilfe eines öffentlichen Schlüssels (HPK) des ersten Hostprozessors,
- Übertragung des verschlüsselten Sitzungsschlüssels zu dem ersten Hostprozessor, und
- Entschlüsselung des Sitzungsschlüssels durch den ersten Hostprozessor mithilfe eines privaten Schlüssels (NSK), der dem öffentlichen Schlüssel (NPK) des ersten Hostprozessors entspricht, wobei der Sitzungsschlüssel anschließend verwendet wird, um Daten zu verschlüsseln, die zwischen dem ersten Hostprozessor und dem Betreiber übertragen werden.

11. Verfahren nach Anspruch 10, wobei der Sitzungsschlüssel (SESK) von einem zweiten gesicherten Hostprozessor (HP2) des NFC-Systems (Chipsatz) erzeugt wird.

12. Verfahren nach einem der Ansprüche 1 bis 11, welches Anfangsschritte des Empfangs eines Authentitätszertifikats (CeNH) durch den ersten Hostprozessor (HP3) umfasst, wobei eine gesicherte Kommunikationsverbindung mit einem Betreiber (OP, EI) nach Überprüfung des Authentitätszertifikats und nur dann, wenn das Zertifikat gültig ist, hergestellt wird.

13. Verfahren nach einem der Ansprüche 1 bis 12, welches Schritte des Austauschs geheimer Daten zwischen einem Controller (NFCC), der mit der NFC-Schnittstellenschaltung (CLINT) verbunden ist, dem ersten Hostprozessor (HP3) und einem dritten, nicht gesicherten Hostprozessor (HP1) des NFC-Systems (Chipsatz) umfasst, wobei eine Kommunikationsverbindung zwischen dem Controller und dem ersten und dritten Hostprozessor erst nach einer Überprüfung der geheimen Daten und nur dann, wenn die Überprüfung keinen Fehler ergibt, hergestellt wird.

14. Verfahren nach einem der Ansprüche 1 bis 13, welches Anfangsschritte der Übertragung einer einem Authentitätszertifikat (CeNH) zugeordneten eindeutigen Kennung (CID) zu dem ersten Hostprozessor (HP3) umfasst, welche von dem ersten Hostprozessor gespeichert werden.

15. Verfahren nach einem der Ansprüche 1 bis 14, welches Schritte der Überprüfung umfasst, ob das durch den Hostprozessor (HP3) empfangene geheime Datenelement (PIN1) dem erzeugten geheime Datenelement (PIN) entspricht, wobei die Übertragung der verschlüsselten Daten (APP, DATA) nicht durchgeführt wird, falls die Überprüfung einen Fehler ergibt.

16. System zur Bereitstellung eines Dienstes, umfassend eine Entität (EI, OP), die einen Dienst bereitstellt, und mehrere Systeme vom Typ Nahfeldkommunikation (Near Field Communication, NFC) (Chipsatz), die jeweils einen ersten, gesicherten Hostprozessor (HP3) aufweisen, der mit einer NFC-Schnittstellenschaltung (CLINT) verbunden ist, welche das Senden und den Empfang von Daten sicherstellt, um auf den Dienst zuzugreifen,
**dadurch gekennzeichnet, dass**:
die Entität (EI, OP) dafür ausgelegt ist, ein geheimes Datenelement (SSK, PIN) zu erzeugen, ein NFC-Zielsystems (Chipsatz) des geheimen Datenelements aus einer Kennung des Benutzers (UID) zu bestimmen und Daten (APP, DATA), die in den ersten Hostprozessor zu laden sind, unter Verwendung eines öffentlichen Schlüssels (NPK) des ersten Hostprozessors zu verschlüsseln,
das Dienstbereitstellungssystem dafür ausgelegt ist, das geheime Datenelement zu dem ersten Hostprozessor (HP3) des NFC-Zielsystems über eine erste Verbindung zu übertragen, die in Abhängigkeit von der Kennung des Benutzers oder über den Benutzer hergestellt wurde, und die verschlüsselten Daten zu dem ersten Hostprozessor über eine zweite Verbindung zu übertragen, die von der ersten unabhängig ist und in Abhängigkeit von der Kennung des Benutzers oder über den Benutzer hergestellt wurde, und
der erste Hostprozessor (HP3) dafür ausgelegt ist, die empfangenen verschlüsselten Daten mithilfe eines privaten Schlüssels (NSK) zu entschlüsseln, der dem öffentlichen Schlüssel (NPK) des ersten Hostprozessors entspricht, wobei die Übertragung der verschlüsselten Daten zu dem ersten Hostprozessor oder die Entschlüsselung der verschlüsselten Daten nicht ausgeführt wird, falls das durch den ersten Hostprozessor empfangene geheime Datenelement (SSK, PIN1) nicht dem erzeugten geheimen Datenelement (SSK, PIN) entspricht.

17. System nach Anspruch 16, wobei der erste Hostprozessor (HP3) dafür ausgelegt ist, die empfangenen Daten mithilfe des geheimen Datenelements (SSK, PIN) zu entschlüsseln.

18. System nach einem der Ansprüche 16 und 17, wobei das NFC-Zielsystem eine Basisbandschaltung eines Mobiltelefons (HP1) umfasst, die dafür ausgelegt ist, die zu ladenden Daten (APP, DATA) in verschlüsselter Form zu empfangen und sie zu dem ersten Hostprozessor (HP3) zu übertragen.

19. System nach einem der Ansprüche 16 bis 18, wobei die NFC-Schnittstelle (CLINT) des NFC-Zielsystems dafür ausgelegt ist, die zu ladenden Daten (APP, DATA) in verschlüsselter Form zu empfangen, die durch eine kontaktlos lesbare Karte mit integrierter Schaltung (CC) übertragen werden, und sie zu dem Hostprozessor (HP3) zu übertragen.

20. System nach einem der Ansprüche 16 bis 19, wobei das NFC-Zielsystem einen zweiten, gesicherten Hostprozessor (HP2) umfasst, der auf gesicherte Weise mit dem Betreiber (OP2) verbindbar ist und dafür ausgelegt ist, einen Sitzungsschlüssel (SESK) zu erzeugen, den Sitzungsschlüssel mithilfe eines öffentlichen Schlüssels (NPK) des ersten Hostprozessors (HP3) zu verschlüsseln und den verschlüsselten Sitzungsschlüssel zu dem ersten Hostprozessor zu übertragen, wobei der erste Hostprozessor dafür ausgelegt ist, den Sitzungsschlüssel mithilfe eines privaten Schlüssels (NSK), der dem öffentlichen Schlüssel des ersten Hostprozessors entspricht, zu entschlüsseln, wobei der Sitzungsschlüssel anschließend verwendet wird, um Daten zu verschlüsseln, die zwischen dem ersten und dem zweiten Hostprozessor übertragen werden.

21. System nach einem der Ansprüche 16 bis 20, wobei das NFC-Zielsystem einen Controller (NFCC) umfasst, der mit der NFC-Schnittstellenschaltung (CLINT) verbunden ist, und wobei der ersten Hostprozessor (HP3), der Controller (NFCC) und ein dritter, nicht gesicherter Hostprozessor (HP1) dafür ausgelegt sind, geheime Daten auszutauschen, wobei eine Kommunikationsverbindung zwischen dem Controller, dem ersten und dem dritten Hostprozessor erst nach einer Überprüfung der geheimen Daten und nur dann, wenn die Überprüfung keinen Fehler ergibt, hergestellt wird.

22. System nach einem der Ansprüche 16 bis 21, wobei der Hostprozessor (HP3) dafür ausgelegt ist, während einer Personalisierungsphase eine einem Authentitätszertifikat (CeNH) zugeordnete eindeutige Kennung (CID) des NFC-Systems (Chipsatz) zu empfangen und zu speichern.

23. System nach einem der Ansprüche 16 bis 22, wobei das NFC-Zielsystem in einem Mobiltelefon enthalten ist.

## Claims

1. Method for securely loading data into a secure host processor (HP3) of a near field communication (NFC) type system (Chipset),
**characterized in that** it comprises steps consisting in:
- generating a secret datum (SSK, PIN);
- determining a destination NFC system (Chipset) for the secret datum from a user identifier (UID), the NFC system including an NFC interface circuit (CLINT) for transmitting and receiving data;
- transmitting the secret datum to a first host processor (HP3) of the destination NFC system, via a first link established depending on the user identifier or via the user;
- encrypting data (APP, DATA) to be loaded into the first host processor using a public key (NPK) of the first host processor;
- transmitting the encrypted data to the first host processor via a second link that is independent of the first and that is established depending on the user identifier or via the user; and
- decrypting, with the first host processor, the encrypted data using a private key (NSK) corresponding to the public key of the first host processor, either one of the steps of transmitting and decrypting the encrypted data not being carried out if the secret datum (SSK, PIN1) received by the first host processor does not correspond to the generated secret datum (SSK, PIN).

2. Method according to Claim 1, comprising steps of encrypting data (APP, DATA) to be loaded into the host processor (HP3) using the secret datum (SSK, PIN), before transmission to the host processor, and of decrypting, with the host processor, the encrypted data using the secret datum.

3. Method according to Claim 1 or 2, comprising prior steps of authenticating the NFC system (Chipset) and of an operator (OP) generating the secret datum (SSK).

4. Method according to Claim 3, wherein a service provider (EI) providing the data (APP, DATA) to be loaded into the host processor (HP3) authenticates the NFC system (Chipset) and the operator (OP) by verifying certificates (CeNH, CeO) with a trusted authority (CA).

5. Method according to one of Claims 1 to 4, wherein the secret datum (PIN) is transmitted to the destination NFC system (Chipset) by the user of the NFC system, who receives the secret datum and inputs it into the NFC system.

6. Method according to one of Claims 1 to 4, wherein the secret datum (SSK) is transmitted in signed form by an operator (OP) having generated the secret datum, and the signature is verified by a service provider (EI) providing the data (APP, DATA) to be loaded into the first host processor (HP3).

7. Method according to one of Claims 1 to 6, wherein the data (APP, DATA) to be loaded are transmitted in encrypted form to the NFC system (Chipset) via a mobile telephone network and via a basic mobile telephone circuit (HP1).

8. Method according to one of Claims 1 to 6, wherein the data (APP, DATA) to be loaded are transmitted in encrypted form to the NFC system (Chipset) via a contactless reader integrated-circuit board (CC) communicating with the NFC interface circuit (CLINT).

9. Method according to one of Claims 1 to 8, wherein the first link is established via a second secure host processor (HP2) of the NFC system (Chipset).

10. Method according to one of Claims 1 to 4 and 6 to 9, wherein the first secure communication link is established between the first host processor (HP3) and an operator (OP) having generated the secret datum (SSK) and comprises steps of:
- a trusted authority (CA) authenticating the NFC system (Chipset);
- generating a session key (SESK);
- encrypting the session key using a public key (HPK) of the first host processor;
- transmitting the encrypted session key to the first host processor; and
- decrypting, with the first host processor, the session key using a private key (NSK) corresponding to the public key (NPK) of the first host processor, the session key then being used to encrypt data transmitted between the first host processor and the operator.

11. Method according to Claim 10, wherein the session key (SESK) is generated by a second secure host processor (HP2) of the NFC system (Chipset).

12. Method according to one of Claims 1 to 11, comprising initial steps of the first host processor (HP3) receiving a certificate of authenticity (CeNH), a secure communication link being established with an operator (OP, EI) after the certificate of authenticity has been verified and only if the certificate is valid.

13. Method according to one of Claims 1 to 12, comprising steps of exchanging secret data between a controller (NFCC) connected to the NFC interface circuit (CLINT), the first host processor (HP3) and a third unsecure host processor (HP1) of the NFC system (Chipset), a communication link between the controller and the first and third host processors being established only after the secret data have been verified and only if the verification reveals no error.

14. Method according to one of Claims 1 to 13, comprising initial steps of transmitting to the first host processor (HP3) a unique identifier (CID) associated with a certificate of authenticity (CeNH), which are stored in memory by the first host processor.

15. Method according to one of Claims 1 to 14, comprising steps of verifying that the secret datum (PIN1) received by the host processor (HP3) corresponds to the generated secret datum (PIN), the encrypted data (APP, DATA) not being transmitted if the verification reveals an error.

16. System for providing a service comprising an entity (EI, OP) providing a service and a plurality of near field communication (NFC) type systems (Chipset) each including a first secure host processor (HP3) connected to an NFC interface circuit (CLINT) ensuring the transmission and reception of data in order to access the service,
**characterized in that**:
the entity (EI, OP) is configured to generate a secret datum (SSK, PIN), to determine a destination NFC system (Chipset) for the secret datum from a user identifier (UID), and to encrypt data (APP, DATA) to be loaded into the first host processor using a public key (NPK) of the first host processor;
the service-providing system is configured to transmit the secret datum to the first host processor (HP3) of the destination NFC system, via a first link established depending on the user identifier or via the user, and to transmit the encrypted data to the first host processor via a second link that is independent of the first and that is established depending on the user identifier or via the user; and
the first host processor (HP3) is configured to decrypt the received encrypted data using a private key (NSK) corresponding to the public key (NPK) of the first host processor, the transmission of the encrypted data to the first host processor, or the decryption of the encrypted data not being carried out if the secret datum (SSK, PIN1) received by the first host processor does not correspond to the generated secret datum (SSK, PIN).

17. System according to Claim 16, wherein the first host processor (HP3) is configured to decrypt the received data using the secret datum (SSK, PIN).

18. System according to either of Claims 16 and 17, wherein the destination NFC system comprises a basic mobile telephone circuit (HP1) configured to receive in encrypted form the data (APP, DATA) to be loaded and to transmit them to the first host processor (HP3).

19. System according to one of Claims 16 to 18, wherein the NFC interface (CLINT) of the destination NFC system is configured to receive the data (APP, DATA) to be loaded in encrypted form, said data being transmitted by a contactless reader integrated-circuit board (CC), and to transmit them to the host processor (HP3).

20. System according to one of Claims 16 to 19, wherein the destination NFC system comprises a second secure host processor (HP2) able to be securely connected to the operator (OP) and configured to generate a session key (SESK), to encrypt the session key using a public key (NPK) of the first host processor (HP3), and to transmit the encrypted session key to the first host processor, the first host processor being configured to decrypt the session key using a private key (NSK) corresponding to the public key of the first host processor, the session key then being used to encrypt data transmitted between the first and second host processor.

21. System according to one of Claims 16 to 20, wherein the destination NFC system comprises a controller (NFCC) connected to the NFC interface circuit (CLINT), and wherein the first host processor (HP3), the controller (NFCC) and an unsecure third host processor (HP1) are configured to exchange secret data, a communication link between the controller, the first and the third host processor being established only after the secret data have been verified and only if the verification reveals no error.

22. System according to one of Claims 16 to 21, wherein the host processor (HP3) is configured to receive and store in memory, during a personalising phase, a unique identifier (CID) of the NFC system (Chipset) associated with a certificate of authenticity (CeNH).

23. System according to one of Claims 16 to 22, wherein the destination NFC system is included in a mobile telephone.
